# EUROPÄISCHE PATENTANMELDUNG

(11) **EP 1 874 021 A1**
(43) Veröffentlichungstag der Anmeldung: **02.01.2008**
(21) Anmeldenummer: 07012426.8
(22) Anmeldetag: 26.06.2007
(51) Int. Cl.: H04M 15/00, G06Q 30/00

(54) **Verfahren zum Bestellen von Waren mittels Anwahl von bestimmten Telefonnummern, automatischer Bestimmung der Lieferadresse und Fakturierung über die Telefonrechnung**

(30) Priorität: 30.06.2006 DE 102006030176
(71) Anmelder: Deutsche Telekom AG, 53113 Bonn (DE)
(72) Erfinder: Brackmann, Ludwig, 53225 Bonn (DE); Damm, Karl-Heinz, 56338 Braubach (DE)

(57) **Zusammenfassung**

Verfahren zum Bestellen und Fakturieren einer zu einem bestimmten Preis angebotenen Ware, wobei ein Kunde vermittels eines über einen Anschluss an ein Kommunikationsnetz angeschlossenes Endgerät die Ware bestellt, wobei dem Anschluss von einem Netzbetreiber (Provider) eine Netzkennung zugeordnet ist, wobei der Netzbetreiber in Zusammenhang mit den Anschlussdaten weitere Kundendaten, insbesondere eine Kundenadresse, in einer Datenbank verwaltet, wobei der Netzbetreiber die von diesem Anschluss geführten Anrufe gegenüber dem Kunden über eine Sammelrechnung, insbesondere über eine Telephonrechnung, abrechnet,
- wobei der von einem Warenanbieter angebotenen Ware neben dem Preis ebenfalls ein Anschluss mit einer Netzkennung, insbesondere einer Telephonnummer, eindeutig zugeordnet wird, die der Kunde zur Annahme des Angebotes über ein Endgerät anwählt,
- wobei nach der Anwahl der der Ware zugeordneten Netzkennung eine Kommunikationsverbindung zum Anschluss der Ware hergestellt wird, wobei das Angebot durch Herstellung der Kommunikationsverbindung angenommen ist,
- wobei der Netzbetreiber den Anruf des Kunden in der Datenbank registriert, wobei die Gebühr für diesem Anruf den Preis der Ware beinhaltet,
- wobei die Ware an die Kundenadresse versandt wird und
- wobei der Netzbetreiber den Preis der Ware über die Gebühr für diesen Anruf automatisch in der an den Kunden gerichteten Sammelrechnung fakturiert..

## Beschreibung

Die Erfindung betrifft ein Verfahren zum Bestellen und Fakturieren einer zu einem bestimmten Preis angebotenen Ware, wobei ein Kunde vermittels eines über einen Anschluss an ein Kommunikationsnetz angeschlossenen Endgerätes die Ware bestellt, wobei dem Anschluss von einem Netzbetreiber (Provider) eine Netzkennung zugeordnet ist, wobei der Netzbetreiber in Zusammenhang mit den Anschlussdaten weitere Kundendaten, insbesondere eine Kundenadresse, in einer Datenbank verwaltet, wobei der Netzbetreiber die von diesem Anschluss geführten Anrufe gegenüber dem Kunden über eine Sammelrechnung, wie die Telephonrechnung, abrechnet. Die Erfindung betrifft zudem ein System zur Umsetzung des Verfahrens.

Vertriebsformen dieser Art, bei denen dem Kunden eine Ware präsentiert wird, die er dann durch Anruf einer angegebenen Telephonnummer erwerben kann, sind in vielfältigen Ausführungsformen bekannt. So sind Formen des sogenannten "Tele-Shopping", beispielsweise von der Sendung "QVC", bekannt, bei denen während eines Fernsehspots ein Produkt in Zusammenhang mit einer Telephonnummer gezeigt wird, das mit einem Anruf dieser Nummer abrufbar ist. Zum Erhalt der Ware muss sich der Kunde in dem Telephongespräch mit seinem Namen und seiner Adresse gegenüber dem Warenanbieter identifizieren. Die Fakturierung findet dann über die Zusendung einer Rechnung oder über die Abbuchung von einem Kreditkartenkonto statt.

Zudem sind vom Internet Vertriebsformen mit unterschiedlichen Fakturierungen bekannt. So können Produkte über das Internet durch einen Mausklick auf der entsprechenden Home-Page des Warenanbieters bestellt und über Kreditkarten abgerechnet werden. Zudem sind Dienste, wie T-Pay^{®} und PayPal^{®} bekannt, die mittlerweile von einer Vielzahl von Warenanbietern benutzt werden und mit denen die Fakturierung einer auf einer Homepage "angeklickten" Ware über ein bei diesem Diensteanbieter geführtes Konto relativ bequem möglich ist.

Auf der anderen Seite ist es aus dem Bereich des Abrufes von Dienstleistungen über das Telephon, beispielsweise beim Telephon-Sex, bekannt, diese Leistung über die Telephonrechnung abzurechnen. Dabei sind diesen "Dienstleistungen" entsprechende Rufnummern, wie die bekannten "0900"-Nummern, zugeordnet, deren Anwahl mit einer erhöhten Gebühr einhergeht. Der Diensteanbieter erhält seine Entlohnung dann entsprechend vom Netzprovider. Ähnliches ist aus der

EP 899 933 A2 für "herkömmliche" Nummern bekannt. Dabei kann der Nutzer über sein Telephon eine Dienstleistung, wie beispielsweise eine Wetterauskunft, abfragen, wobei dieser Service individuell fakturiert und vom Netzprovider über die verschickte Telephonrechnung abgerechnet werden kann.

Die Aufgabe der vorliegenden Erfindung liegt nunmehr darin, ein Verfahren zu schaffen, mit dem eine einfache, komfortable und vor allem sichere Fakturierung von Warenkäufen, die über Sprachtelephonie, insbesondere über Internet-Sprachtelephonie ("Voice over IP"), initiiert werden, möglich ist.

Diese Aufgabe wird durch ein Verfahren mit den Merkmalen des Anspruch 1 gelöst. Vorteilhafte Ausführungsformen sind in den Unteransprüchen genannt.

Ein wesentlicher Aspekt der Erfindung liegt zunächst darin, für eine angebotene Ware einen individuellen Anschluss mit einer Netzkennung, insbesondere einer Telephonnummer, vorzusehen, so dass dieser Netzkennung genau die eine Ware eindeutig zugeordnet ist. Damit hat auch die Ware ihre eigene Telephonnummer, über die sie "zu erreichen" und zu bestellen ist. Der Kunde kann mit der Anwahl der entsprechenden Nummer das Angebot annehmen und damit den Abschluss eines Kaufgeschäftes initiieren.

Im Prinzip läuft ein solches erfindungsgemäßes Kaufgeschäft so, dass der Kunde in einer Werbepräsentation die Ware, deren Preis und deren Telephonnummer wahrnimmt, die Ware "anruft" und nach diesem Anruf die Ware auf dem normalen Versandweg zugestellt bekommt. Besonders wesentlich für die Erfindung ist dabei, dass der Preis der Ware automatisch über die periodisch vom Netzbetreiber, des Kunden generierte Sammelrechnung, insbesondere die Telephonrechnung, eingezogen wird.

Erfindungsgemäß wird also durch den an die Ware gerichteten Anruf eine Kommunikationsverbindung, insbesondere als "sprachlose Sprachverbindung", zum Anschluss der Ware hergestellt, wobei das Angebot durch Herstellung der Kommunikationsverbindung als angenommen gilt. Damit die Fakturierung über die Sammelrechnung geschehen kann, registriert der Netzbetreiber diesen Anruf des Kunden vorteilhafterweise in derselben Datenbank, in der er auch alle sonstigen Anrufe ausgehend von dem Anschluss des Kunden registriert. Diesem "speziellen" Anruf wird jedoch eine Gebühr zuordnet, die den Preis der Ware beinhaltet. Dabei kann der Preis auf unterschiedliche Weise zum Netzbetreiber übermittelt werden.

Generell ist es bei solchen Geschäften vorteilhaft, vor dem Zustandekommen des eigentlichen Kaufgeschäftes eine Authentifikation des Kunden und/oder eine Bestätigung der Bestellung vorzusehen, um dem Missbrauch durch Unberechtigte und eventuellen Versehen des Kunden vorzubeugen. Allerdings gelten für diese Art von Käufen zumindest in Deutschlang besondere Rückgaberechte, falls es zu einem Versehen oder zu Missbrauch kommt.

Um dem Missbrauch vorzubeugen, ist es vorteilhaft, wenn der Netzbetreiber die dem Anschluss zugeordnete Adresse anhand physikalischer Parameter, wie anhand der zum Anschluss führenden Leitungen, lokalisiert. Mit einer solchen Ortung kann die Übereinstimmung der Anschlussadresse mit der Kundenadresse zur Authentifikation des Kunden verglichen werden. So wird verhindert, dass ein Dritter vorgibt der Kunde zu sein. Diese Funktionalität kann über eine bekannte Verwaltungs- und Vermittlungsplattform realisiert werden.

Entgegen der von 0900-Nummern bekannten Abrechnung eines erhöhten Tarifes ist erfindungsgemäß der Netzkennung der Ware ein fester, dem Kunden bekannter Warenpreis zugeordnet, der sich von Ware zu Ware unterscheidet.

Dieser kann beim Netzbetreiber in Verbindung mit der Netzkennung der Ware hinterlegt sein oder im Rahmen der Verbindung über das Netz ausgetauscht werden. Wird nun die spezielle Ware "angerufen", registriert der Netzbetreiber diesen Anruf des Kunden in Zusammenhang mit den sonstigen Anschlussdaten.

Um den sicheren Versandt gewährleisten zu können, werden dem Warenanbieter im Rahmen der Verbindung neben der Spezifikation der Ware auch die in der Datenbank gespeicherten Kundendaten, insbesondere der Name des Kunden und seine Adresse, automatisch übermittelt. Dem Anruf wird nun der Preis der Ware zugeordnet, den der Netzanbieter gegenüber dem Kunden über die allgemeine Sammelrechnung, insbesondere die Telephonrechnung, abrechnet, wobei er diesen gegebenenfalls unmittelbar über einen Abbuchungsauftrag einzieht. Der vom Kunden erhaltene Betrag muss dann vom Netzbetreiber zum Warenanbieter transferiert werden. Um einen reibungslosen Ablauf des Verfahrens gewährleisten zu können, wird der Ware die individuelle Netzkennung und der Preis für die gesamte Dauer des Angebotes, also für eine vergleichsweise lange Zeit, zugeordnet.

Generell kann die Darbietung der Ware über verschiedene Medien geschehen. Im einfachsten Fall kann der Nutzer die Ware auf einem Plakat, einer Liftfass-Säule oder im Fernseher in Verbindung mit einer Telephonnummer wahrnehmen oder von dem Angebot im Rundfunk hören. Diese ruft er dann einfach an und bezahlt über seine Telephonrechnung.

In einer besonders vorteilhaften Ausführungsform wird das Internet in die Sprachkommunikation ("Voice over IP") einbezogen, wobei zumindest ein Teil des Kommunikationsnetzes vom Internet gebildet wird. Um eine solche Internet-Kommunikation zu ermöglichen, wird auf dem Endgerät des Kunden, das ein Computer oder ein (mobiles) Multifunktionstelephon sein kann, eine spezielle Software Anwendung ("Client") installiert. Als derartige "Voice-over-IP- Clients" sind der bekannte SIP-Client oder der H.323-Client zu bevorzugen. Ein solcher Client kann "manuell" oder "automatisch" aufgerufen werden, wobei es generell vorteilhaft ist, wenn sich der Kunde beim ersten Aufruf des Clients durch Eingabe eines Passwortes authentifiziert.

Um den Komfort für den Kunden zu steigern, wird der Client automatisch aufgerufen, sobald der Nutzer beim Surfen auf Homepages mit seinem Cursor auf ein der gewünschten Ware zugeordnetes Feld klickt. Nach dem Klick stellt der Client die Verbindung zum Anschluss der Ware her und löst damit die Bestellung der Ware und deren Abrechnung über die Telephonrechnung automatisch aus. Der Klick auf das Feld kann veranlassen, dass der dafür vorgesehenen Funktion des Clients, beispielsweise einer "callto"-Funktion, neben der Netzkennung der Ware zusätzlich weitere Parameter betreffend die Ware, insbesondere eine Warenbezeichnung und der Preis, übergeben wird. Diese Parameter können beim Netzbetreiber gespeichert werden. Um den Handlungswillen des Kunden für dieses Rechtsgeschäft zu dokumentieren, ist es auch bei dieser ansonsten automatisierten Bestellung vorteilhaft, wenn vor der eigentlichen Bestellung eine Bestätigung abgefragt wird.

Durch den Klick wird also der diesem Link hinterlegte Client, ähnlich einem E-Mail Client oder einem Internet-Browser, automatisch aktiviert und es wird ein solches "Quasi"-Telephonat ("Telephon-Link") nur ohne die Funktion der Sprachtelephonie aufgebaut. Der Nutzer kann mit einem Klick auf einen solchen Kauf- und Bezahl-Button einerseits seinen Kaufwunsch ausdrücken und andererseits bequem über seine Telephonrechnung bezahlen.

Wenn ein solcher Client insbesondere nach einem identifizierenden Login-Prozess und/oder einer authentifizierenden Passwort-Vorgabe vom Kunden geöffnet wird, kann er sich mit einer entsprechenden Plattform des Warenanbieters verbinden. Nach der Identifikation ist der Kunde dem Netzanbieter bekannt, so dass ihm die für bestellte Waren zu berechnenden Preise zugeordnet werden können. Im Hinblick auf die mit steigender Leistungsfähigkeit des Mediums zunehmend mehr Bedeutung gewinnenden Internet-Telephonie, ist diese Ausführungsform der Erfindung von ganz besonderem Vorteil.

Das besonders vorteilhafte an diesen Clients ist, dass sie schon existieren und bequem für die Verwirklichung der Erfindung einsetzbar sind. Letztendlich werden sie dazu einfach nur ihrer Funktionalität der Sprachübertragung zumindest in gewissem Rahmen beraubt. Ein solcher Client ist schließlich per se in der Lage, die entsprechende Netzkennung anzuwählen und eine am Preis der Ware bemessene Abrechnungsnotiz ("Billing-Record") an das Konto des Nutzers, auf dem die Telephongebühren auflaufen, zu verschicken. Dabei kann eine solche Tarifierung wie ein erhöhter Minutentarif oder ein Blocktarif behandelt werden. Die für das Versenden der Ware nötigen Kundendaten, insbesondere Name und Adresse, werden vorteilhafterweise, wie gesagt, zusammen mit dem Anruf an den Warenanbieter übermittelt, damit dieser die Ware dem Versand übergeben kann. Im Hinblick auf eine erhöhte Datensicherheit kann der Versand aber auch vom Netzanbieter selber organisiert werden, der die Ware zentral von den Anbietern erhält. Die Identität des Nutzers tritt somit dem Warenanbieter gegenüber nicht in Erscheinung.

Da ein Internet-Anbieter nicht unbedingt für jedes seiner Produkte zum Abrechnen der Bezahlung eine separate und willkürliche Telephonnummer, beispielsweise auf der Basis einer 0900-Nummer, generieren möchte, ist es vorteilhaft, den "Telephon-Link" um einen variablen Parameter, der den Preis repräsentiert, zu erweitern. Dieser Parameter kann derartig verschlüsselt hinterlegt werden, dass er sicher und unverfälscht von der Webseite zum Client übertragen werden kann. Dabei können die Schlüsselworte im Link und im Client durch den Netzprovider autorisiert werden.

Wie schon erwähnt, ist es zur Vermeidung versehentlicher Bestellungen vorteilhaft, wenn der Kunde im Rahmen des Verfahrens um eine Bestätigung gebeten wird. Das kann auf schriftlichem Wege geschehen, indem nach Anklicken des Telephon-Links eine entsprechende Abfrage auf dem Display erscheint. In dieser Abfrage können beispielsweise die Daten des Nutzers, respektive des gerade benutzen Anschlusses, also der Name und die Rechnungsadresse, sowie eine Anzeige des zu bestellenden Produktes mit dessen Preis erscheinen. Die Bestellung wird dann erst ausgelöst, nachdem die Bestätigung erfolgt ist. Da ehedem eine Kommunikationsverbindung aufgebaut ist, kann um die Bestätigung aber auch im Rahmen einer Telephon-Ansage etwa folgendermaßen gebeten werden: "Sehr geehrter Kunde XYZ, wollen Sie wirklich das Produkt ABC zum Preis von € 123 bestellen, dann antworten Sie jetzt mit ja".

Um dem Missbrauch der Bezahlfunktion durch automatisierte Hacker-Software weiter vorzubeugen, ist es vorteilhaft, wenn von dem Nutzer eine Interaktion, beispielsweise die Eingabe von dargestellten Zahlen und Buchstaben, gefordert wird, die nur er leisten kann. Funktionen, die solche Interaktionen unterstützen, sind hinlänglich bekannt. Neben der Authentifikation durch das Passwort kann auch noch eine Erhebung biometrischer Daten durchgeführt werden. Die Authentifizierung kann aber auch über eine dem Netzprovider bekannte Kennung des Anschlusses, in der Art einer einzigartigen Adresse, geschehen, die auch wechseln kann und die ansonsten nicht weiter kommuniziert wird.

Die Vorteile der Erfindung liegen auch darin, dass der Nutzer bei der Inanspruchnahme kostenpflichtiger Internet-Angebote von Internet-Shops insofern keinen "Medienbruch" erfährt, als er sich immer in demselben Medium, nämlich dem Internet, bewegt. Er kann surfen, kaufen und konsumieren, ohne den Finger von der Tastatur zu nehmen. Dazu muss er sich nicht bei speziellen Internet-Payment-Diensten anmelden. Diese Hürde fällt, da er nur noch sein in Zukunft "normales" Internet-Telephon nutzen muss.

Zur technischen Umsetzung des erfindungsgemäßen Verfahrens bedarf es der Mittel, insbesondere der Netzstruktur und der daran angeschlossenen Endgeräte, der herkömmlichen Sprachtelephonie oder der Internettelephonie.

## Patentansprüche

1. Verfahren zum Bestellen und Fakturieren einer zu einem bestimmten Preis angebotenen Ware, wobei ein Kunde vermittels eines über einen Anschluss an ein Kommunikationsnetz angeschlossenes Endgerät die Ware bestellt, wobei dem Anschluss von einem Netzbetreiber (Provider) eine Netzkennung zugeordnet ist, wobei der Netzbetreiber in Zusammenhang mit den Anschlussdaten weitere Kundendaten, insbesondere eine Kundenadresse, in einer Datenbank verwaltet, wobei der Netzbetreiber die von diesem Anschluss geführten Anrufe gegenüber dem Kunden über eine Sammelrechnung, insbesondere über eine Telephonrechnung, abrechnet,
**dadurch gekennzeichnet,**
- **dass** der von einem Warenanbieter angebotenen Ware neben dem Preis ebenfalls ein Anschluss mit einer Netzkennung, insbesondere einer Telephonnummer, eindeutig zugeordnet wird, die der Kunde zur Annahme des Angebotes über ein Endgerät anwählt,
- **dass** nach der Anwahl der der Ware zugeordneten Netzkennung eine Kommunikationsverbindung zum Anschluss der Ware hergestellt wird, wobei das Angebot durch Herstellung der Kommunikationsverbindung angenommen ist,
- **dass** der Netzbetreiber den Anruf des Kunden in der Datenbank registriert, wobei die Gebühr für diesem Anruf den Preis der Ware beinhaltet,
- **dass** die Ware an die Kundenadresse versandt wird und
- **dass** der Netzbetreiber den Preis der Ware über die Gebühr für diesen Anruf automatisch in der an den Kunden gerichteten Sammelrechnung fakturiert.

2. Verfahren nach Anspruch 1,
**dadurch gekennzeichnet,**
**dass** das Endgerät des Kunden über den Anschluss an ein Telephonnetz oder an das Internet angeschlossen ist.

3. Verfahren nach Anspruch 1 oder 2,
**dadurch gekennzeichnet,**
**dass** dem Warenanbieter mit Herstellung der Verbindung neben der Warenspezifikation die in der Datenbank gespeicherten Kundendaten, insbesondere der Name des Kunden und seine Adresse, automatisch übermittelt werden.

4. Verfahren nach einem der vorherigen Ansprüche,
**dadurch gekennzeichnet,**
**dass** der Netzbetreiber die dem Anschluss zugeordnete Adresse anhand physikalischer Parameter, insbesondere anhand der zum Anschluss führenden Leitungen, lokalisiert, wobei diese Anschlussadresse und die Kundenadresse zur Authentifikation des Kunden verglichen werden.

5. Verfahren nach einem der vorherigen Ansprüche,
**dadurch gekennzeichnet,**
**dass** zumindest ein Teil des Netzes vom Internet gebildet wird, wobei auf dem Endgerät des Kunden eine spezielle Software-Anwendung (Client), insbesondere ein "Voice over IP-Client", beispielsweise ein SIP-Client oder ein H.323-Client, realisiert ist, die die Sprachtelephonie über das Internet ermöglicht.

6. Verfahren nach Anspruch 5,
**dadurch gekennzeichnet,**
**dass** der Client automatisch aufgerufen wird, wenn der Nutzer beim Surfen auf Homepages mit seinem Cursor auf ein der gewünschten Ware zugeordnetes Feld klickt, wobei der Client nach dem Klick die Verbindung zum Anschluss der Ware herstellt und damit die Bestellung der Ware und deren Abrechnung über die Sammelrechnung automatisch auslöst.

7. Verfahren nach Anspruch 5 oder 6,
**dadurch gekennzeichnet,**
**dass** der Klick auf das Feld veranlasst, dass der dafür vorgesehenen Funktion des Clients, beispielsweise einer "callto"-Funktion, neben der Netzkennung der Ware weitere Parameter betreffend die Ware, insbesondere eine Warenbezeichnung und der Preis übergeben wird.

8. Verfahren nach einem der Ansprüche 5 bis 7,
**dadurch gekennzeichnet,**
**dass** der Kunde sich bei Aufruf des Clients durch Eingabe eines Passwortes authentifiziert.

9. Verfahren nach einem der vorherigen Ansprüche,
**dadurch gekennzeichnet,**
**dass** der Ware für die Dauer des Angebotes der individuelle Anschluss und der Preis dauerhaft zugeordnet wird.

10. Verfahren nach einem der vorherigen Ansprüche,
**dadurch gekennzeichnet,**
**dass** vor der Herstellung der Kommunikationsverbindung zum Anschluss der Ware dem Nutzer eine Bestätigungsabfrage dargeboten wird.

11. Verfahren nach einem der vorherigen Ansprüche,
**dadurch gekennzeichnet,**
**dass** die Ware dem Nutzer auf einem Plakat, einer Littfass-Säule, in Fernsehen oder Rundfunk in Verbindung mit einer Telephonnummer präsentiert wird.

12. System zur Umsetzung des Verfahrens nach einem der vorherigen Ansprüche.
